# EUROPEAN PATENT SPECIFICATION

(11) **EP 2 556 941 B1**
(45) Date of publication and mention of the grant of the patent: **08.10.2014**
(21) Application number: 12179037.2
(22) Date of filing: 02.08.2012
(51) Int. Cl.: B29C 45/28

(54) **Control device of an injector for injection molding of plastic material**
Steuervorrichtung einer Spritzgießdüse für Kunststoffmaterialien
Dispositif de commande d'un injecteur pour moulage par injection de matière plastique

(30) Priority: 08.08.2011 IT TO20110750
(43) Date of publication of application: 13.02.2013
(73) Proprietor: Inglass S.p.A., 31020 San Polo di Piave (Treviso) (IT)
(72) Inventor: Massler, Peter, 90574 Buchschwabach (DE); Bortoluzzi, Christian, 31020 San Polo di Piave (TV) (IT)
(74) Representative: Citron, Massimiliano

(56) References cited:
- FR-A1- 2 364 758
- JP-A- 6 064 002
- US-A1- 2010 225 025

## Description

The present invention relates in general to injection molding apparatuses for plastics. More particularly the invention relates to the injectors used in such molding apparatuses, comprising traditionally an obturator pin displaceable between a closed position and an open position of an injection gate from a hot runner to a mold, wherein the obturator pin is operated by means of a fluid linear actuator, particularly of the pneumatic type, having opposed thrust chambers connected to a supply line of air under pressure.

Still more in particular, though not exclusively, the invention relates to a control device of such injectors used for sequential injection mode, or in which a series of injectors are operated in cascade arrangement so as to inject the plastic material into the mold cavity in subsequent times.

This injection mode, used for example for molding articles having an extension substantially greater than their width, first involves the introduction of the plastic material into the mold by means of a first injector until the front of plastic material produced by it reaches the injection gate of a second, contiguous injector. The second injector then proceeds with its injection while that of the first injector is stopped, and so on until the filling of the mold cavity.

During the sequential injection the pressure within the hot runner undergoes an increase and consequently, at the time when the pin of each injector is moved from the closed position to the open position typically with a sudden movement, an explosive effect - so to speak - is generated: the pressure of the molten plastic material is discharged instantaneously within the mold cavity, generating an aesthetic defect on the molded article.

This problem has already been dealt with and solved, in relation to injectors equipped with hydraulic actuators, in the patent document US-2010/0225025 through the use of a regulating valve interposed between the chamber of the hydraulic actuator opposite to that corresponding to the opening of the obturator pin and the change-over electrovalve which controls the supply and discharge of both chambers.

This solution, although relatively simple, is effective in that the hydraulic fluid driving the actuator is obviously incompressible, but it would not be the same in case of a pneumatic actuator. The same document US-2010/0225025 describes two solutions also applicable to pneumatic actuators, in the first of which a proportional pneumatic valve is used, and in the second of which there is provided, in series with the pneumatic actuator, a hydraulic damper. Both solutions are not able to ensure the necessary effectiveness and also are constructively complicated and therefore expensive.

The object of the present invention is to solve the above technical problem in an appreciably simple and functional manner, and such object is achieved by means of a control device of an injector of the type defined at the beginning, essentially characterized by the fact that only the thrust chamber of the pneumatic actuator corresponding to the opening displacement of the obturator pin is connected to the supply line of air under pressure through a change-over valve, and the thrust chamber corresponding to the closing displacement of the obturator pin is connected to the supply line through a pneumatic spring calibrated at a lower pressure than the one of said supply line.

The pneumatic spring consists conveniently of a simple pressure-regulating valve with free discharge, and is typically set at a lower pressure of about 1-2 bar than that of the supply line. To ensure a good closing of the obturator pin at the injection gate of the mold, the pressure of the supply line may conveniently be of at least 8-10 bar.

The solution idea according to the invention has the advantage of being appreciably simpler and cheaper, particularly in the case of cascaded injectors for sequential injection. Also, in the case of sequential injection, for example radial injection wherein the first injector is at the center of a circular figure and the additional injectors are arranged radially and must open simultaneously and the same way after a given injection time, it is possible to use a single pneumatic spring, with considerable savings on the amount of pressure regulators and driving valves which would be necessary to employ.

The invention will now be described in detail with reference to the appended drawing, provided purely by way of non-limiting example, in which:
- Figure 1 is a schematic view showing an injector in axial cross-section, represented in the closing configuration for the obturator pin, with the relative control device according to the invention, and
- Figure 2 is a view similar to Figure 1 showing the opening configuration of the injector.

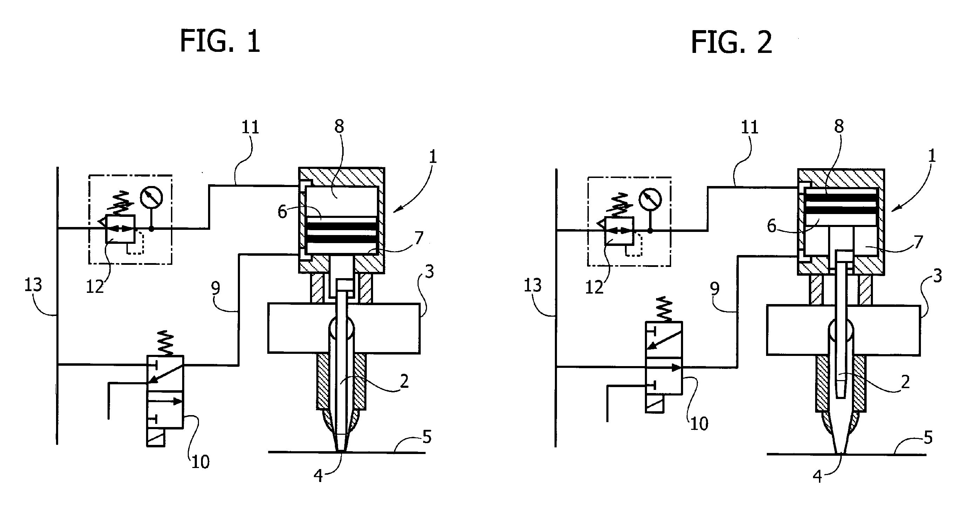

Referring to the drawings, numeral 1 indicates as a whole an injector for injection molding of plastics including, in a way generally known per se, an obturator pin 2 axially movable between a closing position (shown in Figure 1) and an open position (represented in Figure 2) of an injection passage ("gate") 4 from a hot runner 3 to the cavity of a mold 5. The displacement of the obturator pin 2 is controlled through a pneumatic linear actuator whose piston 6 delimits two opposite thrust chambers 7, 8.

The thrust chambers 7, 8 are connected to a supply line of air under pressure 13 by means of a peculiar control device which, according to the invention, consists of a change-over valve 10 (monostable electrovalve) arranged on a line 9 which connects the power supply line 13 with the thrust chamber 7 corresponding to the opening movement of the obturator pin 2, and a pneumatic spring 12 arranged on a line 11 that connects the supply line 13 with the other thrust chamber 8, corresponding the closing movement of the obturator pin 2.

The pneumatic spring 12 may consist of a free-discharge pressure-regulating valve whose calibration, also adjustable, corresponds to a pressure lower of about 1-2 bar with respect to that of the supply line 13. The latter, in order to ensure an efficient closure of the obturator pin 2 at the injection passage 4, advantageously has a value of pressure of at least 8-10 bar, and to such effect a small booster with accumulator may be optionally provided (i.e. a pressure step-up device, of a type known per se), if the pressure of the line 13 is not sufficient to ensure the proper operation of the obturator pin 2 during both slow opening and closing.

In the closing condition of the obturator pin 2 represented in Figure 1 the chamber 7 is connected for venting and the pneumatic spring 12 keeps the thrust chamber 8 at constant pressure; as mentioned at a value lower than that of the supply line 13.

When the change-over valve 10 is actuated to put the supply line 13 in communication with the thrust chamber 7, the pressure greater than that within the thrust chamber 7 accomplishes the opening displacement of the obturator pin 2, with a speed dependent on the difference between the two pressures or, better, between the forces acting on the opposite faces of the piston 6. In this way, the opening can be done in a relatively slow manner, or in any case gradually and not abruptly thereby avoiding, particularly in the case of sequential injection obtained by using a series of cascaded injectors, the generation of cosmetic defects on the molded articles.

The use of the pneumatic spring 12 has the advantage, for example in comparison with a mechanical helical spring, to be independent of the position of the piston 6, since the volume variation of the circuit can be negligible. In case, to further improve the situation, a small expansion tank may be provided, advantageously accomplished with a simple tube.

The control device according to the invention has, with respect to the known solutions described above, the advantage of being particularly simple and economical even in the case of application to a large number of injectors. Furthermore, in the case of sequential injection it is possible to use a single pneumatic spring serving several injectors, with considerable savings due to the suppression of pressure regulators and driving valves.

The control device according to the invention is also advantageous in the case of direct injection molding, by arranging it at the first injection point, since it allows in this case to achieve high molding accuracy and quality, getting free from the precision characteristics of the injection-molding press.

Of course, the construction details and the embodiments may be widely varied with respect to what is here described and illustrated, moreover without departing from the scope of the present invention as defined in the following claims.

## Claims

1. Control device of an injector (1) for injection molding of plastic material, including an obturator pin (2) displaceable between a closed position and an open position of an injection gate (4) from a hot runner (3) to a mold (5) by means of a linear pneumatic actuator having opposed thrust chambers (7, 8) connected to a supply line (13) of air under pressure,
**characterized in that**
only the thrust chamber (7) of the pneumatic actuator corresponding to the opening displacement of the obturator pin (2) is connected to the supply line (13) of air under pressure through a change-over valve (10), and the thrust chamber (8) corresponding to the closing displacement of the obturator pin (2) is connected to the supply line (13) through a pneumatic spring (12) calibrated at a lower pressure than the one of said supply line (13).

2. Control device according to claim 1, **characterized in that** the pneumatic spring (12) consists of a pressure-regulating valve.

3. Control device according to claim 1 or 2, **characterized in that** the calibration pressure of said pneumatic spring (12) is 1-2 bar lower than the pressure of said supply line (13).

4. Control device according to claim 3, **characterized in that** the pressure of the supply line (13) is in the range of 8-10 bar.

5. Cascade injection molding system including a series of sequentially operated injectors provided with a control device according to one or more of the preceding claims.

## Patentansprüche

1. Steuergerät eines Injektors (1) für Kunststoffspritzguss, mit einem Obturaturstift (2), der zwischen einer geschlossenen Position und einer offenen Position eines Einspritzkanals (4), der von einem Heißkanal (3) zu einer Form (5) führt mit Hilfe eines linearen Stellglieds umschalten kann, das gegenüberliegende Druckkammern (7, 8) besitzt, die an eine druckluftbeaufschlagte Zuleitung (13) angeschlossen sind,
**dadurch gekennzeichnet, dass**
nur die Druckkammer (7) des Pneumatikstellglieds der offenen Position des Obturatorstifts (2) an die Zufuhrleitung (13) der Druckluft angeschlossen ist mit Hilfe eines Umschaltventils (10) und die Druckkammer (8) für die Schließung des Obturatorstifts (2) über eine Pneuamtikfeder (12), die auf einen niedrigeren Druckwert als die besagte Zuleitung (13) eingestellt ist, an diese Zuleitung (13) angeschlossen ist.

2. Steuergerät gemäß Anspruch 1, **dadurch gekennzeichnet, dass** die Pneumatikfeder (12) aus einem Druckregelventil besteht.

3. Steuergerät gemäß Anspruch 1 oder 2, **dadurch gekennzeichnet, dass** die Druckkalibrierung der besagten Pneumatikfeder (12) 1-2 Bar niedriger als der Druck der besagten Zuleitung (13) ist.

4. Steuergerät gemäß Anspruch 3, **dadurch gekennzeichnet, dass** der Druck der Zuleitung (13) in einem Bereich von 8-10 bar liegtH.

5. Kaskadenspritzgießsysteme mit einer Serie von in Reihe geschalteten Injektoren, die mit einer Steuervorrichtung gemäß einem oder mehreren der vorhergehenden Ansprüche ausgestattet ist.

## Revendications

1. Dispositif de commande d'un injecteur (1) pour moulage par injection d'une matière plastique, comprenant une broche d'obturation (2) réglable entre une position fermée et une position ouverte d'une trappe d'injection (4) d'un canal de coulée à chaud (3) dans un moule (5), au moyen d'un actionneur linéaire pneumatique ayant des chambres de poussée opposées (7, 8) reliées à une ligne d'alimentation (13) en air sous pression,
**caractérisé en ce que**
seule la chambre de poussée (7) de l'actionneur pneumatique correspondant au déplacement d'ouverture de la broche d'obturation (2) est reliée à la ligne d'alimentation (13) en air sous pression par un robinet de substitution (10). La chambre de poussée (8) correspondant au déplacement de fermeture de la broche d'obturation (2) est reliée à la ligne d'alimentation (13) par un ressort pneumatique (12) calibré à une pression plus basse que celle de ladite ligne d'alimentation (13).

2. Un dispositif de commande selon la revendication 1, **caractérisé en ce que** le ressort pneumatique (12) est constitué par un régulateur de pression.

3. Un dispositif de commande selon la revendication 1 ou 2, **caractérisé en ce que** la pression de calibrage dudit ressort pneumatique (12) est plus basse de 1 ou 2 bars que la pression de ladite ligne d'alimentation (13).

4. Un dispositif de commande selon la revendication 3, **caractérisé en ce que** la pression de la ligne d'alimentation (13) se situe dans la plage de 8 - 10 bars.

5. Un système de moulage par injection en cascade comprenant une série d'injecteurs actionnés en séquence, muni d'un dispositif de commande selon une ou plusieurs des revendications précédentes.
